# EUROPEAN PATENT APPLICATION

(11) **EP 1 837 132 A1**
(43) Date of publication of application: **26.09.2007**
(21) Application number: 06005630.6
(22) Date of filing: 20.03.2006
(51) Int. Cl.: B25J 9/16

(54) **Manipulator with control means and a remote main controller communicating via wireless means**

(71) Applicant: ABB RESEARCH LTD., 8050 Zürich (CH)
(72) Inventor: Gentzell, Tobias, 724 82 Västeras (SE); Eriksson, Peter, 723 41 Västeras (SE); Kjellson, Jimmy, 723 44 Västeras (SE); Frey, Jan-Erik, 723 48 Västeras (SE); Strand, Martin, 722 46 Västeras (SE)
(74) Representative: Kock, Ina

(57) **Abstract**

The manipulator according to the invention exhibits an improved structure since the communication between the main controller (1) in the remote unit and the controllers (7) in the workplace unit is performed via a wireless communication channel (12) which is preferably a radio channel. Accordingly, no cables are required to connect the main controller (1) and the control units (7) for communication purposes. However, the controllers (7) of the manipulator according to the invention are connected to encoders (6) or resolvers (6) to receive information about the actual position of the controlled manipulator axis (N). Further, the controllers (7) of a manipulator according to the invention are connected to drivers (5) for supplying power to the motors (3) causing the movement of the manipulator. Thus, the controller performs the control of the manipulator movements in a direct and local manner, however, being remotely controlled by the main controller via a wireless communication channel.

## Description

The present invention relates to manipulators, for example an industrial robot, having several controllable axes.

Manipulators, such as industrial robots, have several, typically six, degrees of freedom, which are addressed as controllable axes. At least one motor is provided for each controllable axis and is supplied with power in a controlled manner by means of a drive device associated with an individual one of said motors. A power supply is provided to supply electric power to said drive devices. A main controller performs the control operations and provides axis computers with respective control signals such that the drive devices can be controlled.

In one known arrangement, the main controller, the axis computers, the main power supply unit and the drive devices are housed in a cabinet remote from the robot work place. Alternatively, only the main controller, the axis computers and the main power supply unit are located remote from the robot work place in said cabinet, whereas the drive devices are positioned on or in the manipulator, preferably in the vicinity of the associated electric motor. Regarding the arrangement of the drive devices reference is made to EP 0 728 559 A2.

Since data about the position of each individual axis is required for controlling the operation of the manipulator, the main controller is in communication with position detectors, for example resolvers or encoders, which are arranged at the manipulator in association with said controllable axes. In some manipulators, a measurement device, a so-called serial measurement board is provided in the work place unit, said measurement device being connected to the position detectors on the one hand and to a controller on the other hand. The measurement device supplies electric power to the position detectors, if required, and receives the output signals from the position detectors. The measurement device processes the received position indicating signals and supplies position information/data to the connected controller.

According to US 4.223.313 the transmission of electrical power along the arm of an industrial robot is effected without contact at the joint positions either by using a magnetic coupling provided by means of a transformer formed by windings housed in ferrite cores or by capacitive coupling obtained by means of two capacitors formed by annular surfaces facing each other. The circuit for transmission of electrical power is also able to carry remote control instructions from a main computer controlling the general functions to the actuator mounted to end of the robot arm.

Further, it is known from WO 2005/060068 to provide a contactless power supply and a wireless communication system between an industrial robot and a tool mounted on the last axis of the robot so that the tool can be changed automatically.

From a more general point of view and without discussing the structure of an industrial robot as such, JP 2001/297389 describes to supply power to sensors and to output sensor signals from sensors by wireless means. Similarly, power and control signals are supplied to motors by wireless means.

The technical goal of the present invention is to further improve the structure and control of a manipulator, especially an industrial robot, as generally described above.

In accordance with the present invention, a manipulator, for example an industrial robot, is provided of which parts are arranged at a workplace location and of which other parts are arranged at one or more remote locations, said manipulator comprising
at a remote location:
- a main controller,
- first wireless communication means connected to the main controller and
- a main power supply unit and
at said workplace location:
- a plurality of drive means, each drive means for moving the manipulator with respect to one of a plurality of controllable axes and each drive means comprising at least one motor,
- a plurality of drive devices, each for supplying electric power to said at least one motor of a respective one of said plurality of drive means,
- a plurality of position indicating means for indicating a position of one of said plurality of controllable axes, each position indicating means being associated with a respective one of said plurality of drive means,
- manipulator control means connected to said plurality of drive means and position indicating means, each drive device being connected to said manipulator control means for receiving control signals, and
- second wireless communication means connected to said manipulator control means for wireless communication between the manipulator control means and said main controller.

The above manipulator according to the invention exhibits an improved structure since the communication between the main controller in the remote unit and the controllers in the workplace unit is performed via a wireless communication channel which is preferably a radio channel. Accordingly, no cables are required to connect the main controller and the control units for communication purposes. However, the controllers of the manipulator according to the invention are connected to encoders or resolvers to recieve information about the actual position of the controlled manipulator axis. Further, the controllers of a manipulator according to the invention are connected to drivers for supplying power to the motors causing the movement of the manipulator. Thus, the controller perfoms the control of the manipulator movements in a direct and local manner, however, being remotely controlled by the main controller via a wireless communication channel.

In a preferred embodiment power is tranmitted also in a contactless manner at least across the main or first axis of the manipuator, so that the advantage is achieved that the manipulator can be rotated without any limitation around the first axis.

While the above structure is described also in claim 1, advantageous embodiments of the above manipulator are described in the subclaims.

Further advantages and features of the invention can be gathered from the claims and the following description of preferred embodiments of the invention, with reference to the drawings, in which:
- Fig. 1: shows a schematic block diagram of a first embodiment of a manipulator according to the invention;
- Fig. 2: shows a schematic block diagram of a second embodiment of a manipulator according to the invention;
- Fig. 3: shows a schematic block diagram of a third embodiment of a manipulator according to the invention; and
- Fig. 4: shows a schematic block diagram of a fourth embodiment of a manipulator according to the invention.

In the following description of preferred embodiments of the invention reference will be made to a manipulator comprising six controllable axes each of which being equipped with one motor. In the Figures only three of the controllable axes are explicitly shown. However, it is noted that the invention is not limited with respect to the number of controllable axes but is usable also to control manipulators having a different number of controllable axes and/or motors, as well as so-called external axes which are added to a manipulator by means of additonal tools.

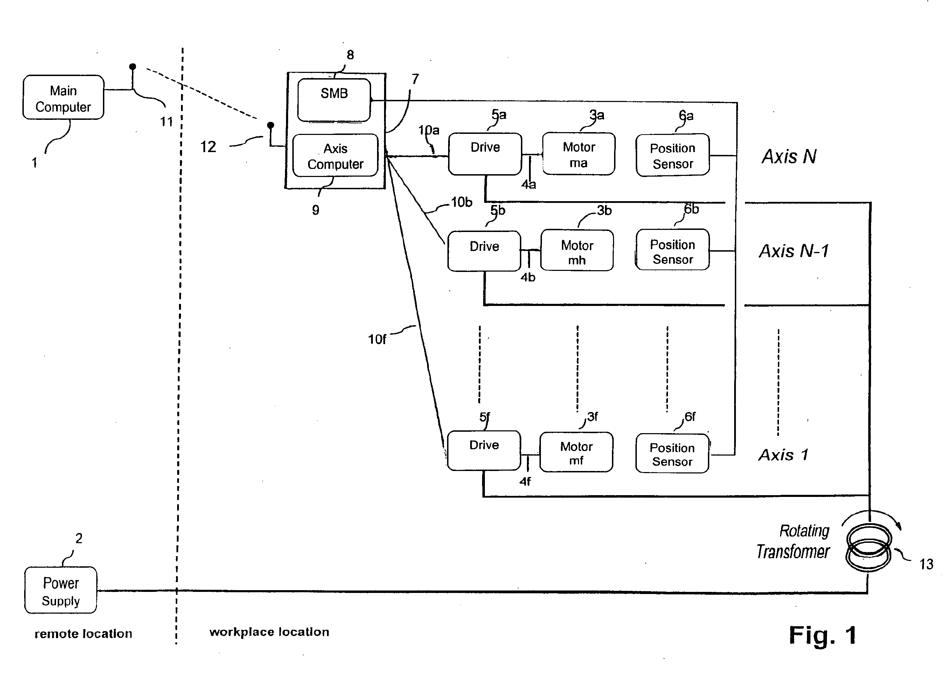

As shown in Fig. 1, a manipulator according to the invention comprises at a remote location a main controller 1 and a main power supply unit 2. Further, at a workplace location which is located remote from the location of the main controller 1 and the main power supply unit 2, all mechanically operating components of the manipulator are provided which define the at least six controllable axes a to f of the manipulator, including electrical motors for moving the mechanical components with respect to said controllable axes.

As shown in Fig. 1, the embodiment of the manipulator according to the invention comprises six motors mₐ, m_{b}, ..., m_{f}. The motors mₐ...m_{f} are shown in Fig. 1 also to represent drive means 3a, 3b, ..., 3f which comprise further mechanical parts required for moving the manipulator with respect to one of the six controllable axes a to f. By means of one of a plurality of power lines 4a, 4b, ..., 4f, each of the drive means 3a...3f is connected to a respective one of a plurality of drive devices 5a, 5b, ..., 5f, which are arranged at the workplace location of the manipulator. Specifically, each of the drive devices 5a...5f is adapted for supplying power in a controlled manner to the motor mₐ...m_{f} of the associated drive means 3a...3f.

Further, each of the drive means 3a...3f for moving the manipulator in its plurality degrees of freedom is associated with one of a plurality of position indicating means 6a, 6b, ..., 6f, for example resolvers or encoders. The position indicating means 6a...6f are connected with a manipulator controller 7 which preferrably comprises a serial measurement board (SMB) 8 and an axis computer 9. The manipulator controller 7, particularly the axis computer 9 is connected with said drive devices 5a...5f via control lines 10a, 10b, ..., 10f to provide control signals to said drive devices to drive said motors ma...mf in a controlled manner.

According to the invention, the main controller 1 at the remote location is connected to a first wireless receiver/transmitter 11. The manipulator controller 7 at the workplace location is connected to a second wireless receiver/transmitter 11. Thereby, the main controller 1 and the mainpulator controller 7 can communicate with each other while the desired control operation is performed. Preferrably, the first and second receiver/transmitters are radio receiver/transmitters although optical receiver/transmitters, for example IR receiver/transmitters or any other wireless communication device may also be used.

In the embodiment of the invention shown in Fig. 1, the main power supply unit 2 is connected to a rotating transformer 13 which is arranged such that power is supplied at least across the first axis of the manipulator in a contacless manner. Generally, , any kind of wireless or contactless power transmission unit can be employed to supply power across the first axis according to the invention. The first axis (Axis 1) is the main axis of the manipulator since the manipulator is fixed to the ground or any other reference point on one side of said first axis. By providing contactless power transmission across the main axis of the manipulator, a high degree of flexibility is achieved as the manipulator can be freely rotated around said main axis without any limitation and without the danger of cabling wear as no cables are required to supply power across the main axis.

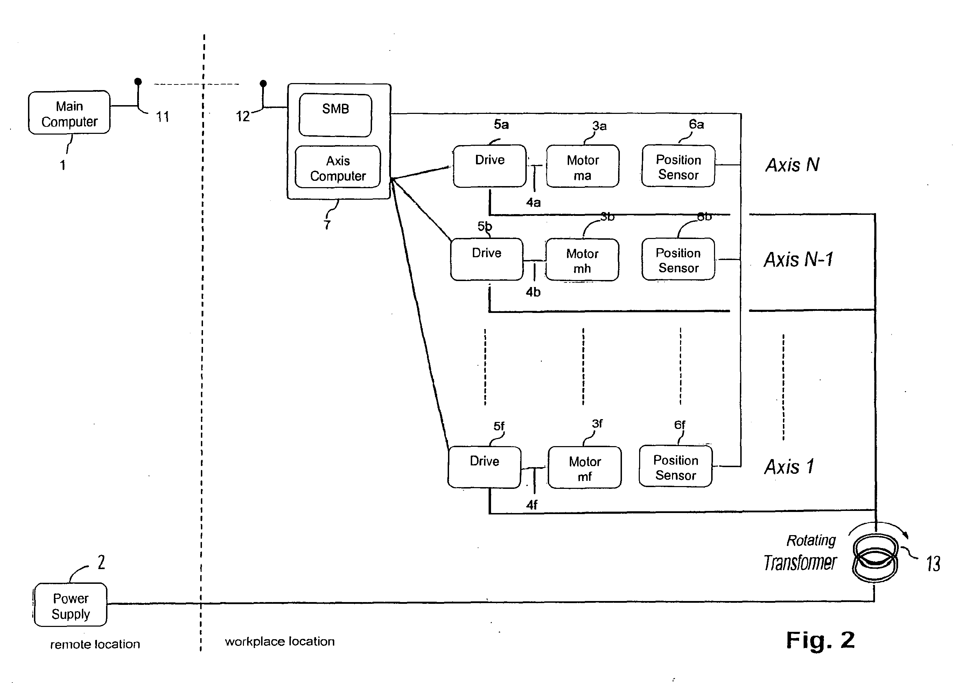

In Fig. 2, a second embodiment of the manipulator according to the invention is shown. Since the second embodiment corresponds in many aspects to the first embodiment described with respect to Fig. 1, reference is made to the respective description above. Furthermore, identical reference signs are used in Figures 1 and 2 where appropriate to denote corresponding elements.

In particular, according to the second embodiment and in contrast to the first embodiment, the manipulator controller 7 is provide as an integrated manipulator controller in which the functions of a serial measurement board and of an axis computer are combined. Thereby, the amount of circuitry required in a manipulator according to the invention can be reduced. The drive devices 5a...5f and the position indicators 6a...6f are connected directly to the integrated manipulator controller 7. Similarly, the wireless receiver/transmitter 12 is directly connected to the integrated manipulator controller 7.

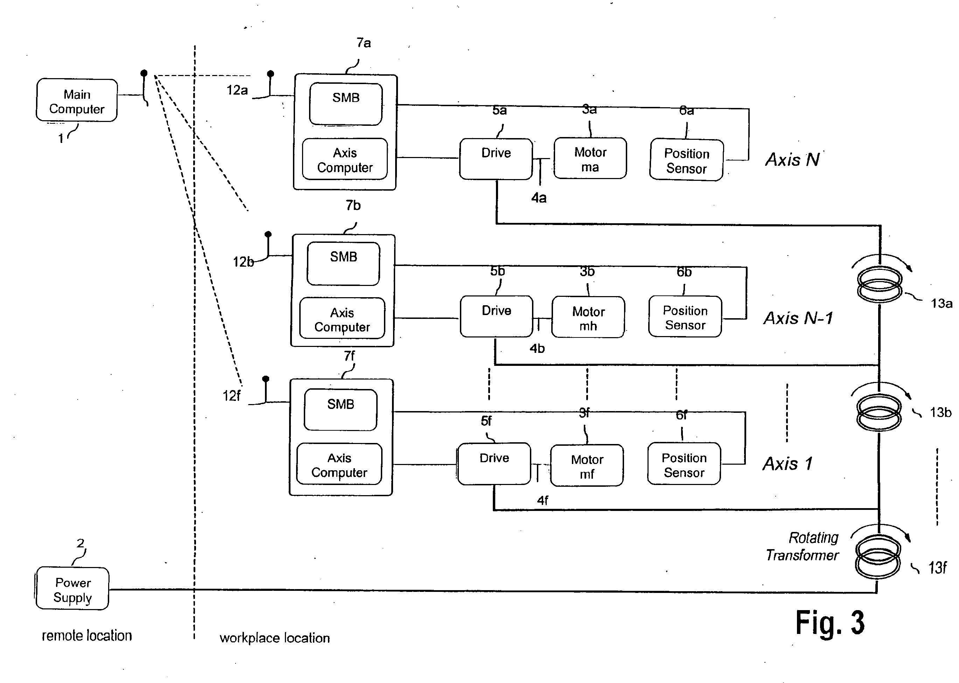

In Fig. 3, a third embodiment of the manipulator according to the invention is shown. Since the third embodiment corresponds in many aspects to the first embodiment described with respect to Fig. 1 and 2, reference is made to the respective description above. Furthermore, identical reference signs are used in Fig. 1, 2 and 3 where appropriate to denote corresponding elements.

In particular, according to the third embodiment, a plurality of integrated manipulator controllers 7a, 7b, ..., 7f are provided each of which being associated with one of said drive devices 5a...5f. Each of said manipulator controllers 7a...7f is connected to a respective drive device 5a...5f. To enable each manipulator controller 7a...7f to communicate with the main controller 1 at the remote location, a plurality of second wireless communication receiver/transmitters 12a, 12b, ..., 12f are provided each of which being connected to a respective integrated manipulator controller 7a...7f.

To achieve maximum flexibility as well as minimum cabling wear, the third embodiment comprises a plurality of contactless power transmission units 13a, 13 b, ... 13f arranged such that power is supplied across the axis of the manipulator in a contactless manner. Accordingly, the drive device of each axis of the manipulator is supplied with power by means of one of said contactless power transmission units 13a...13f which are preferrably rotating transformer arranged at the axes of the manipulator.

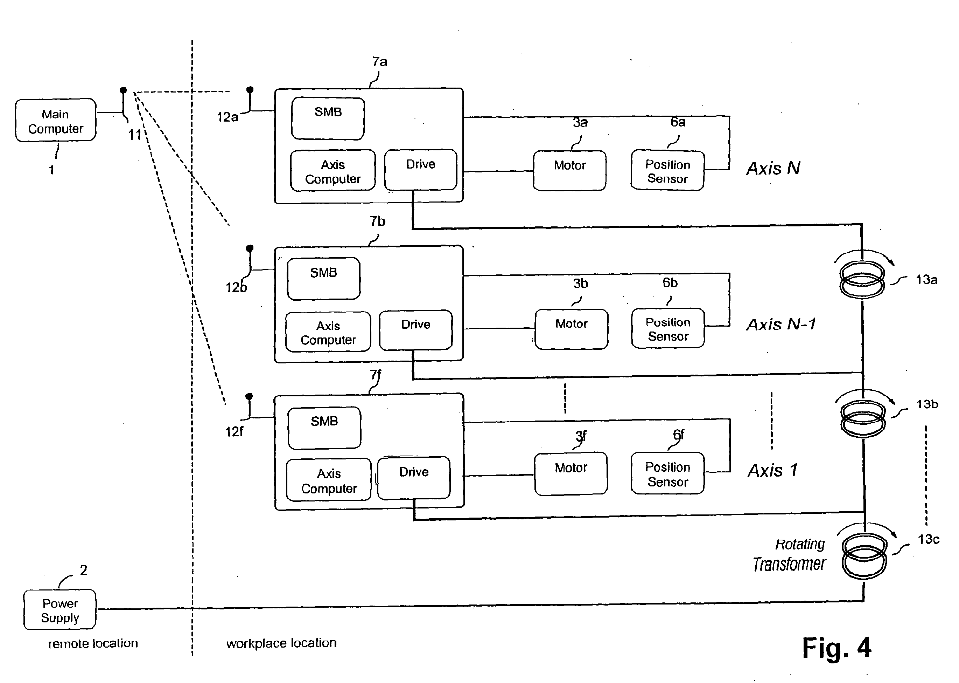

In Fig. 4, a fourth embodiment of the manipulator according to the invention is shown. Since the fourth embodiment corresponds in many aspects to the embodiments described with respect to Fig. 1 to 3, reference is made to the respective description above. Furthermore, identical reference signs are used in Figures 1, 2, 3 and 4 where appropriate to denote corresponding elements.

As can be taken from Fig. 4, according to the fourth embodiment the drive devices are combined with the integrated manipulators to form integrated electrical units or circuits. Compact units of this kind can be arranged at the workplace location on the manipulator much easier than individual electrical unit or circuits which further require cabling to interconnect the units.

## Claims

1. Manipulator, for example an industrial robot, of which parts are arranged at a workplace location and of which other parts are arranged at one or more remote locations, comprising
at a remote location:
- a main controller (1),
- first wireless communication means (11) connected to said main controller, and
- a main power supply unit (2), and
at said workplace location:
- a plurality of drive means (3a...3f), each drive means for moving the manipulator with respect to one of a plurality of controllable axes (Axis 1...N ) and each drive means comprising at least one motor (mₐ...m_{f}),
- a plurality of drive devices (5a...5f), each for supplying electric power to said at least one motor (mₐ...m_{f}) of a respective one of said plurality of drive means (3a...3f),
- a plurality of position indicating means (6a...6f) for indicating a position of one of said plurality of controllable axes (Axis 1...N), each position indicating means being associated with a respective one of said plurality of drive means (3a...3f),
- manipulator control means (7, 9) connected to said plurality of drive means (6a...6f) and position indicating means (8a...8f), each of said drive devices (5a...5f) being connected to said manipulator control means for receiving control signals, and
- second wireless communication means (12) connected to said manipulator control means (7, 9) for wireless communication between the manipulator control means (7, 9) and said main controller (1).

2. Manipulator, for example an industrial robot, according to claim 1 wherein said manipulator control means (7) comprise a serial measurement board (8) connected to said position indicating means (6a...6f) and an axis computer (9) connected to said serial measurement board.

3. Manipulator, for example an industrial robot, according to claim 2 wherein a serial measurement board (8) and said axis computer (9) of said manipulator control means are arranged in an integrated manipulator control unit (7).

4. Manipulator, for example an industrial robot, according to claim 1 to 3 wherein a plurality of manipulator control means (7a...7f) is provided each of which being associated to one of said controllable axes (Axis 1...N) of said manipulator.

5. Manipulator, for example an industrial robot, according to claim 3 and 4 wherein said each of said drive devices (5a...5f) is integrated with one manipulator control unit.

6. Manipulator, for example an industrial robot, according to claim 4 or 5 comprising a plurality of wireless communciation means (12a...12f) each of which being associated with one of said manipulator control means (7a...7f).

7. Manipulator, for example an industrial robot, according to anyone of the preceding claims wherein said wireless communication means (11; 12, 12a...12f) provide communication by means of radio signals.

8. Manipulator, for example an industrial robot, according to anyone of the preceding claims comprising a plurality of contactless power transmission means (13a...13f) each of which being provided for transfering power across one of the further axes of the manipulator and for supplying power to a respective one of said plurality of drive devices.

9. Manipulator, for example an industrial robot, according to anyone of the preceding claims wherein said each of said drive devices (5a...5f) is integrated with a manipulator control unit (7a...7f).

10. Manipulator, for example an industrial robot, according to anyone of the preceding claims further comprising contactless power transmission means (13) provided for transfering power at least across a first axis (Axis 1) of the manipulator and for supplying power to said plurality of drive devices (5a...5f), said contactless power transmission means being connected to said main power supply unit (2).
